# EUROPÄISCHE PATENTANMELDUNG

(11) **EP 1 293 699 A2**
(43) Veröffentlichungstag der Anmeldung: **19.03.2003**
(21) Anmeldenummer: 02019016.1
(22) Anmeldetag: 26.08.2002
(51) Int. Cl.: F16D 65/00, F16D 65/12

(54) **Bremsrotor mit Polrad**

(30) Priorität: 18.09.2001 DE 10145947
(71) Anmelder: WABCO Perrot Bremsen GmbH, 68229 Mannheim (DE)
(72) Erfinder: Antony, Paul, 67550 Worms (DE); Berger, Gerhard, 76726 Germersheim (DE); Falter, Wolfgang, 69118 Heidelberg (DE); Jäger, Hellmut, 67067 Ludwigshafen (DE); Keller, Marcus, 68535 Edingen-Neckarhausen (DE); Keller, Roland, 69181 Leimen (DE)
(74) Vertreter: Patentanwälte Leinweber & Zimmermann

(57) **Zusammenfassung**

Die Erfindung betrifft eine Bremse mit
einem Drehelement (1),
einem Polrad (2), das derart an dem Drehelement (1) gehalten ist, dass
- es mit dem Drehelement (1) um eine Drehachse dreht,
- eine erste quer zur Drehachse liegende Seite des Polrades (2) dem Drehelement (1) zugewandt ist und
- eine zweite quer zur Drehachse liegende Seite des Polrades (2) dem Drehelement (1) abgewandt ist, und
einem mit einem auf der ersten Seite des Polrades (2) angeordneten ersten Anschlagabschnitt zusammenwirkenden ersten Axialanschlag (5) und einem mit einem auf der zweiten Seite des Polrades angeordneten zweiten Anschlagabschnitt zusammenwirkenden zweiten Axialanschlag (4) zum Begrenzen einer Axialverschiebung des Polrades (2) bezüglich des Drehelementes (1) auf ein erstes vorbestimmtes Maß.

Erfindungsgemäß ist vorgesehen, dass entlang jeder zur Drehachse parallelen Linie, die durch den ersten oder den zweiten Axialanschlag läuft, ein Abstand zwischen dem ersten Anschlagabschnitt und dem zweiten Anschlagabschnitt kleiner ist als ein Abstand zwischen dem ersten Axialanschlag (5) und dem zweiten Axialanschlag.

## Beschreibung

Die Erfindung betrifft eine Bremse mit
einem Drehelement,
einem Polrad, das derart an dem Drehelement gehalten ist, dass
   - es mit dem Drehelement um eine Drehachse dreht,
   - eine erste quer zur Drehachse liegende Seite des Polrades dem Drehelement zugewandt ist und
   - eine zweite quer zur Drehachse liegende Seite des Polrades dem Drehelement abgewandt ist, und
einem mit einem auf der ersten Seite des Polrades angeordneten ersten Anschlagabschnitt zusammenwirkenden ersten Axialanschlag und einem mit einem auf der zweiten Seite des Polrades angeordneten zweiten Anschlagabschnitt zusammenwirkenden zweiten Axialanschlag zum Begrenzen einer Axialverschiebung des Polrades bezüglich des Drehelementes auf ein erstes vorbestimmtes Maß.

Bremsen der oben genannten Art sind bekannt, beispielsweise aus der DE 42 30 012 C2 und der EP 0 666 478 B1.

Nach der DE 42 30 012 C2 ist im Rahmen einer ersten Ausführungsform eine in das Polrad integrierte Feder vorgesehen, die das Polrad axial in Richtung auf das in diesem Fall von einer Bremsscheibe gebildete Drehelement vorspannt. Nach einer zweiten Ausführungsform ist vorgesehen, dass ein Endabschnitt des Polrades radial nach außen aufgeweitet ist und in eine entsprechende Ausnehmung an der Bremsscheibe eingreift, wodurch ebenfalls eine axiale Vorspannung des Polrades in Richtung auf die Bremsscheibe bewirkt wird.

Nach der EP 0 666 478 B1 ist vorgesehen, dass Vorsprünge an dem Polrad, die in Nuten eingreifen, federnd ausgebildet sind, wodurch eine axiale Vorspannung des Polrades gegen das auch in diesem Fall von einer Bremsscheibe gebildete Drehelement erreicht wird.

Die Halterung des Polrades an dem Drehelement bei den bekannten Bremsen neigt zur Rostunterwanderung. Dadurch kann es zu einem Verziehen des Polrades kommen. Darüber hinaus ist ein Wechseln des Polrades nur schwer möglich. Ferner lassen die bekannten Halterungen des Polrades an dem Drehelement keinen Ausgleich in Folge unterschiedlicher Materialausdehnungen bei Erhitzung der Bremse zu, weshalb die Gefahr einer De-Positionierung des Polrades besteht.

Der Erfindung liegt die Aufgabe zugrunde, eine Bremse der eingangs genannten Art derart weiterzubilden, dass nicht mehr die Gefahr einer Rostunterwanderung besteht und dass Raum für die Folgen unterschiedlicher Materialausdehnungen zur Verfügung steht.

Erfindungsgemäß wird die gestellte Aufgabe dadurch gelöst, dass
entlang jeder zur Drehachse parallelen Linie, die durch den ersten oder den zweiten Axialanschlag läuft, ein Abstand zwischen dem ersten Anschlagabschnitt und dem zweiten Anschlagabschnitt kleiner ist als ein Abstand zwischen dem ersten Axialanschlag und dem zweiten Axialanschlag.

Der Erfindung liegt die verblüffend einfache Erkenntnis zugrunde, dass die beim Stand der Technik auftretenden Probleme minimiert sind, wenn auf die axiale Vorspannung des Polrades gegen das Drehelement praktisch verzichtet wird. Mit anderen Worten wird erfindungsgemäß das Polrad quasi "schwimmend" gelagert. Da nämlich der Abstand zwischen dem ersten Anschlagabschnitt und dem zweiten Anschlagabschnitt kleiner ist als der Abstand zwischen dem ersten Axialanschlag und dem zweiten Axialanschlag, liegt das Polrad immer nur höchstens an dem einen Axialanschlag oder dem anderen Axialanschlag an, niemals aber gleichzeitig an beiden Axialanschlägen. Dies führt zu einer erheblichen Reduzierung bis Eliminierung von Rostunterwanderung. Darüber hinaus ist die "schwimmende" Lagerung bzw. Halterung des Polrades an dem Drehelement selbstverständlich auch tolerant gegenüber Unterschieden in der Materialausdehnung bei Wärmeeinfluss, so dass solche unterschiedlichen Ausdehnungen nicht zu einem Verziehen des Polrades führen.

Erfindungsgemäß bevorzugt ist der zweite Axialanschlag an einer separaten Halteeinrichtung ausgebildet. Insbesondere im Gegensatz zu der Ausgestaltung nach der EP 0 666 478 B1 kann dadurch das Polrad wesentlich einfacher gestaltet werden.

Weiter bevorzugt kann der erste Axialanschlag an einer separaten Halteeinrichtung ausgebildet sein. Dadurch kann das Drehelement einfacher ausgestaltet werden. Auch ist es nicht erforderlich, dass eventuell vorhandene Kühlrippen an dem Drehelement zur Halterung des Polrades zweckentfremdet werden, wie dies beispielsweise bei der Lösung nach der DE 42 30 012 C2 der Fall ist.

Weiter erfindungsgemäß bevorzugt weist das Drehelement eine Ausnehmung zum zumindest teilweisen Aufnehmen der Halteeinrichtung auf. Das Ausbilden einer solchen Ausnehmung an dem Drehelement stellt eine konstruktiv sehr simple Maßnahme dar, die ansonsten keinerlei Nachteile für die Gestaltung des Drehelementes mit sich bringt.

Als eine besonders einfache Ausgestaltung der Erfindung ist bevorzugt, dass die Halteeinrichtung einen Spreng- oder Wellring aufweist. Ein solcher Spreng- oder Wellring vereint nämlich in sich die Vorteile einer besonders einfachen Montage und Demontage einerseits und besonders großer Zuverlässigkeit der Halterung andererseits.

Zusätzlich oder alternativ kann erfindungsgemäß vorgesehen sein, dass die Halteeinrichtung eine parallel zur Drehachse liegende Verankerungseinrichtung aufweist. Dadurch ist die Halteeinrichtung und damit das Polrad besonders einfach zu montieren und demontieren, weil dazu das Verankerungselement nur in Axialrichtung bewegt werden muss.

Als besonders einfach wird eine Ausführung bevorzugt, bei der der zweite Axialanschlag an einem freien Ende des Verankerungselementes liegt. Mit anderen Worten wird beispielsweise von dem als besonders einfach bewährten Prinzip einer Schraube mit Schraubkopf Gebrauch gemacht, wobei die Unterseite des Schraubkopfes als Axialanschlag dient.

Insofern ist es weiter erfindungsgemäß bevorzugt, dass der zweite Axialanschlag einstückig mit der Verankerungseinrichtung ausgebildet ist.

Alternativ kann der zweite Axialanschlag aber auch an einer von der Verankerungseinrichtung durchsetzten Scheibe ausgebildet sein. Dadurch kann insbesondere die Fläche des zweiten Axialanschlages über das normale Maß von beispielsweise Schrauben vergrößert werden, was die Flexibilität weiter erhöht.

Nach einer besonders bevorzugten Ausführungsform der Erfindung ist der erste Anschlagabschnitt an einem Axialansatz an dem Drehelement ausgebildet, der einen Winkelabschnitt um die Drehachse von weniger als 360° abdeckt. Im Vergleich zu einer Lösung mit einem ringförmig geschlossenen ersten Anschlagabschnitt ist dadurch die Anschlagfläche verringert, was einerseits die Wärmeübertragung vom Bremskörper auf das Polrad und andererseits die Möglichkeit eines Anrostens auf ein Minimum reduziert. Darüber hinaus können in Umfangsrichtung weisende Seitenflächen des Axialansatzes zur Drehkopplung mit dem Polrad dienen.

Weiter bevorzugt hat die erfindungsgemäße Bremse einen mit einem dritten Anschlagabschnitt einer Umfangsfläche des Polrades zusammenwirkenden Radialanschlag zum Begrenzen einer Verschiebung des Polrades bezüglich des Drehelementes in einer Richtung quer zur Drehachse auf ein zweites vorbestimmtes Maß, das größer als Null ist.

Mit anderen Worten wird das Polrad nach dieser Ausgestaltung nicht nur in Axialrichtung, sondern auch in einer quer zur Drehachse liegenden Richtung quasi "schwimmend" gelagert. Daher trägt auch diese Ausgestaltung zum Unterbinden von Rostunterwanderung und zur Toleranz bei Materialausdehnungen in Folge von Erwärmung bei.

Besonders bevorzugt ist erfindungsgemäß eine Zentriereinrichtung zum Führen des Polrades beim Anbringen an dem Drehelement vorgesehen.

Schließlich ist erfindungsgemäß vorgesehen, dass das Drehelement eine Bremsscheibe ist. Mit anderen Worten wird nach dieser Ausgestaltung das Polrad an der Bremsscheibe gehalten. Dadurch wird die mit dem Polrad gewonnene Information über den aktuellen Drehwinkel und die aktuelle Drehzahl der Bremsscheibe und damit des Rades besonders genau.

Im folgenden ist die Erfindung anhand bevorzugter Ausführungsbeispiele unter Bezugnahme auf die beiliegende Zeichnung mit weiteren Einzelheiten näher erläutert. Dabei zeigen
- die Figuren 1 bis 3: schematisch eine erste Ausführungsform der Halterung eines Polrades an einer Bremsscheibe einer erfindungsgemäßen Bremse,
- die Figuren 4 u. 5: eine zweite Ausführungsform und
- die Figuren 6 u. 6.1: eine dritte Ausführungsform.

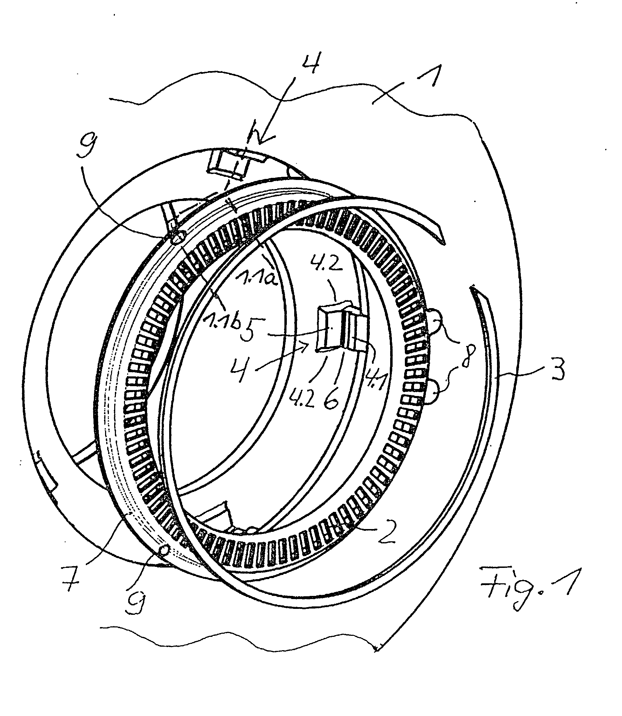

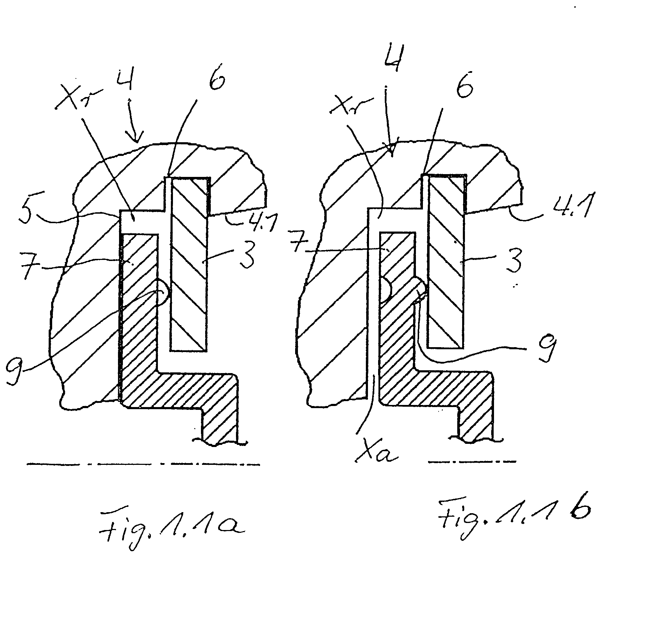

Fig. 1 zeigt eine Bremsscheibe 1 einer Bremse, ein Polrad 2 und einen Spreng- oder Wellring 3. Das Polrad 2 weist Durchbrüche auf, deren Winkellage und/oder Umlaufgeschwindigkeit im Betrieb mittels eines in der Zeichnung nicht dargestellten Sensors erfasst werden. Das Sensorsignal wird beispielsweise einem ABS (Anti-Blockier-System) oder einem anderen Überwachungssystem zugeführt.

Die Bremsscheibe 1 weist eine durch einen Radialbund 4 begrenzte Anlagefläche 5 mit einer davon beabstandeten (unterbrochenen) Ringnut 6 auf. Der Radialbund 4 erstreckt sich mit einem Bereich 4.1 zum offenen Teil der Bremsscheibe als Einlegebereich für das Polrad 2 und den Spreng- oder Wellring 3.

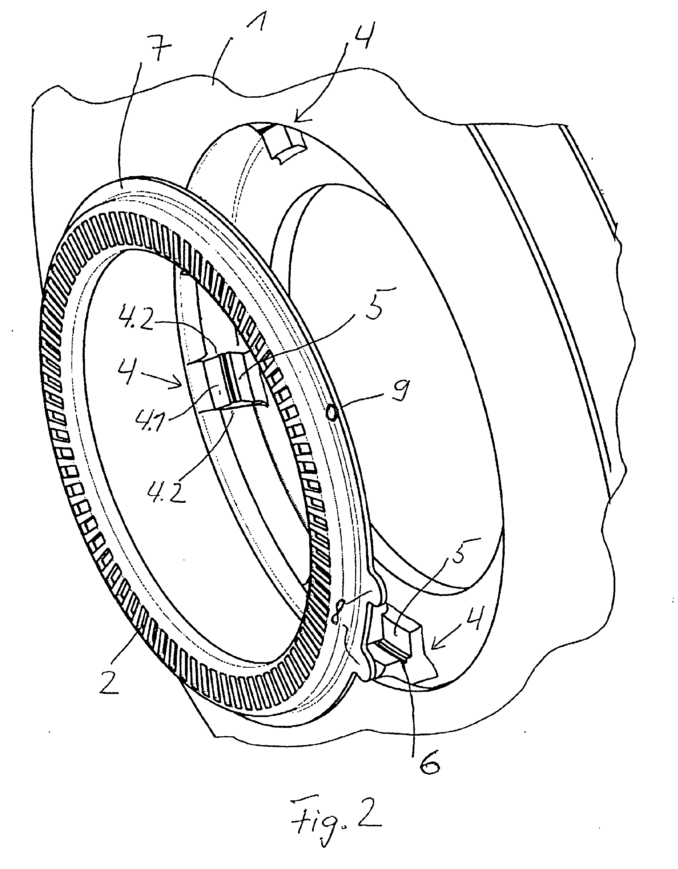

Gemäß Fig. 2 ist das Polrad mit einem Halteflansch 7 versehen, der an der Anlagefläche 5 anliegt. Bei der hier dargestellten Ausführungsform sind die Impulsöffnungen in Axialrichtung für einen ihnen gegenüberliegenden, jedoch in der Zeichnung nicht dargestellten Impulsaufnehmer oder Sensor ausgeführt. Die Öffnungen können aber auch in Radialrichtung im Polrad angeordnet sein. Als Verdrehsicherung für das Polrad 2 gegenüber der Bremsscheibe 1 dienen zwei Vorsprünge 8 an dem Halteflansch 7, die mit entsprechenden Ausformungen der Bremsscheibe 1 korrespondierend die Drehsicherung bilden.

Der Spreng- bzw. Wellring 3 wird zur axialen Verschiebungsbegrenzung des Polrades 2 in die Ringnut 6 eingelegt. Die radiale Verschiebungsbegrenzung des Polrades erfolgt durch den Radialbund 4. Zwischen den Durchmessern des Halteflansches 7 einerseits und des Radialbundes 4 andererseits ist ein Radialspiel Xr vorhanden, das eine radiale Ausweichbewegung des Polrades 2 zulässt und somit Verformungen in Folge von unterschiedlichen Wärmeausdehnungen vorbeugt. Ferner ermöglicht das Radialspiel Xr einen verspannungsfreien Ein-/Ausbau des Polrades 2. Erst mit Einlegen des Spreng- oder Wellringes 3 ist das Polrad 2 (schwimmend) an der Bremsscheibe 1 gehalten.

Der Einlegebereich 4.1 ist schräg angestellt. Dadurch werden das maschinelle Einlegen des Polrades 2 und das anschließende Eindrücken des Spreng- oder Wellringes 3 in die Ringnut 6 durch "Selbstzentrierung" verbessert bzw. vereinfacht.

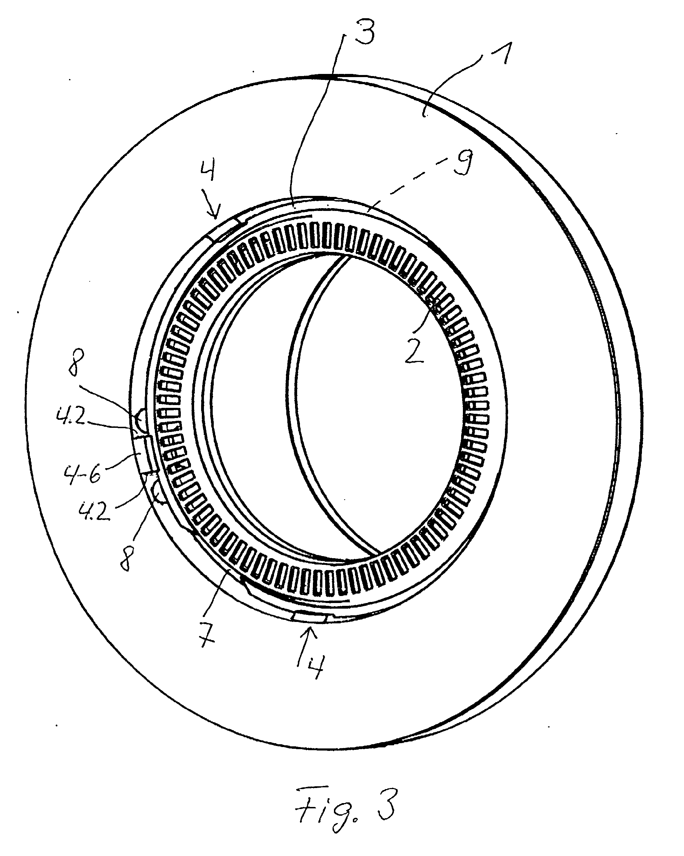

Bei der in Fig. 1 gezeigten Ausführungsform ist die Polradlagerung an der Bremsscheibe 1 nicht vollflächig, sondern unterbrochen. Diese Unterbrechnung ist darauf zurückzuführen, dass die Anlagefläche 5 an einem Ansatz an der Bremsscheibe ausgebildet ist, der nicht ringförmig ausgestaltet ist, sondern die Form eines Steges hat. Gemäß Fig. 2 sieht die in den Figuren 1 bis 3 dargestellte Ausführungsform nicht nur eine, sondern mehrere über den Umfang verteilte Anlageflächen 5 vor. Diese so gebildeten Einzelsegmente verringern zum einen die Wärmebrücke von der Bremsscheibe 1 zum Polrad 2. Zum anderen können durch die somit verkleinerte Angriffsfläche weniger Haftreibungen zwischen dem Polrad 2 und der Bremsscheibe 1 auftreten. Dies verbessert nicht nur entscheidend die Möglichkeit einer radialen Ausweichbewegung des Polrades 2 gegenüber der Bremsscheibe 1, sondern die verringerten Auflageflächen bieten auch weniger Angriffsfläche für einen Rostansatz. Dadurch wird der Polradeinbau bzw. -wechsel wesentlich erleichtert. Auch kann die Verdrehsicherung einfacher hergestellt werden, weil die beiden Vorsprünge 8 vom Halteflansch 7 Seitenflächen 4.2 eines der genannten Einzelsegmente umgreifen, was zusätzliche Elemente für die Verdrehsicherung entbehrlich macht.

Um die Lagerstelle/n an den Einzelsegmenten noch weiter von möglichen axialen Vorspannungen zu entlasten, sind Ausformungen 9 (Warzen) an dem Halteflansch 7 vorgesehen, wodurch erreicht wird, dass die Anlagefläche zwischen dem Spreng- oder Wellring 3 und dem Flansch 7 auf die Oberseite der Ausformungen 9 beschränkt und damit minimiert ist. Dadurch liegen der Halteflansch 7 und der Spreng- oder Wellring 3 nicht flächig aneinander. Da darüber hinaus die Ausformungen 9 in Umfangsrichtung des Polrades 2 bezüglich der Segmentbereiche mit den Anlageflächen 5 verdreht angeordnet sind (vgl. die Figuren 1.1a) und 1.1b)) und somit außerhalb der Segmentbereiche, also nicht dort anliegen, wo das Polrad 2 an den Anlageflächen 5 anliegt, kann dieser Effekt noch weiter verbessert werden. Ein Zusammen- bzw. Anrosten durch Rostunterwanderung ist dadurch wirkungsvoll unterbunden. Der Spreng- oder Wellring 3 kann dadurch Axialkräfte auf das Polrad 2 nur dort auf den Halteflansch 7 aufbringen, wo keine Anlageflächen 5 liegen. Dadurch ergibt sich neben dem radialen Lagerspiel Xr auch ein axiales Lagerspiel Xa (Fig. 1.1b)). Durch diese beiden Lagerspiele werden optimale Ausweichbewegungen ermöglicht.

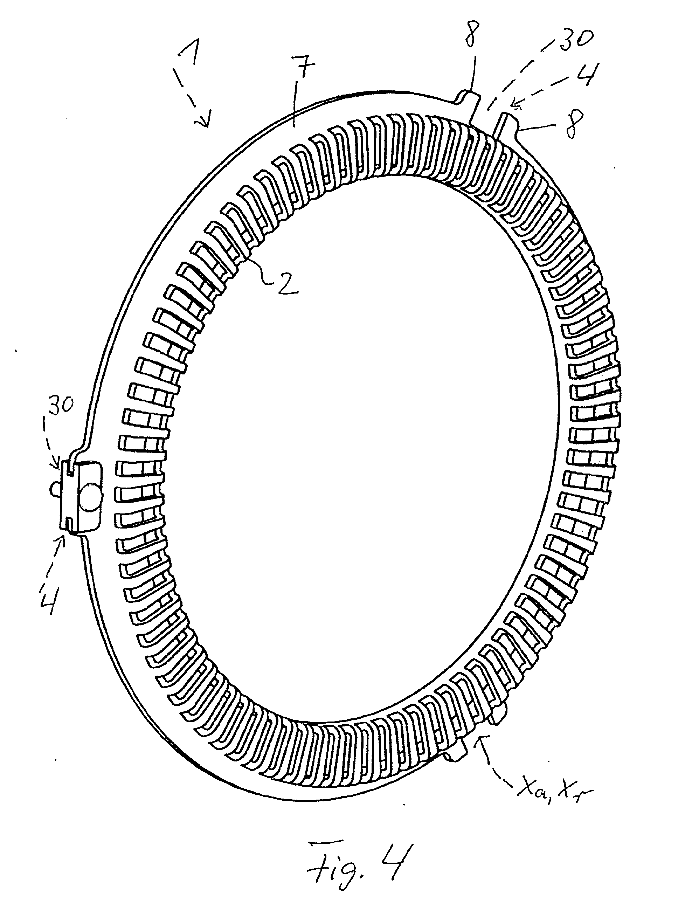

Bei der Ausgestaltung nach den Figuren 4 u. 5 weist das Polrad 2 am Halteflansch 7 mehrere Vorsprünge 8 auf, wobei jeweils zwei dieser Vorsprünge 8 ein Befestigungsmittel 30 in einer mittigen Nut umgreifen. Das Befestigungsmittel 30 wird direkt oder mittels Stifts, Niets, Schraube oder federnd an der Bremsscheibe 1 befestigt. Zwischen dem Befestigungsmittel 30 und dem Polrad 2 ist ein axiales und gegebenenfalls auch radiales Lagerspiel für die Möglichkeit von Ausweichbewegungen vorhanden. Zudem bietet diese Variante noch den Vorteil, dass der Kontakt zu der Bremsscheibe 1 nur über das Befestigungsmittel 30 besteht, wodurch insbesondere Wärmeübertragungen minimiert sind.

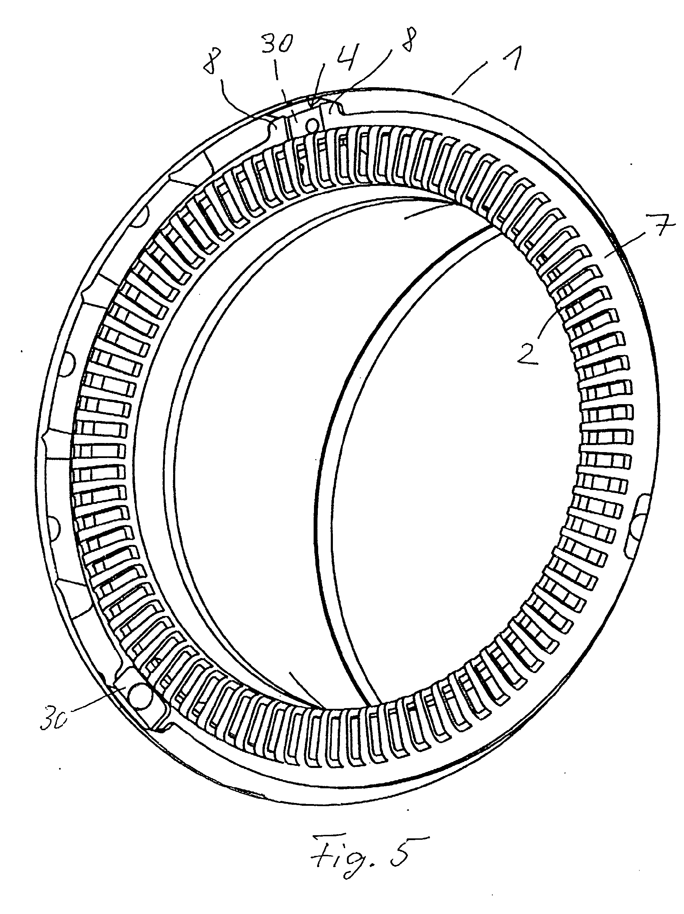

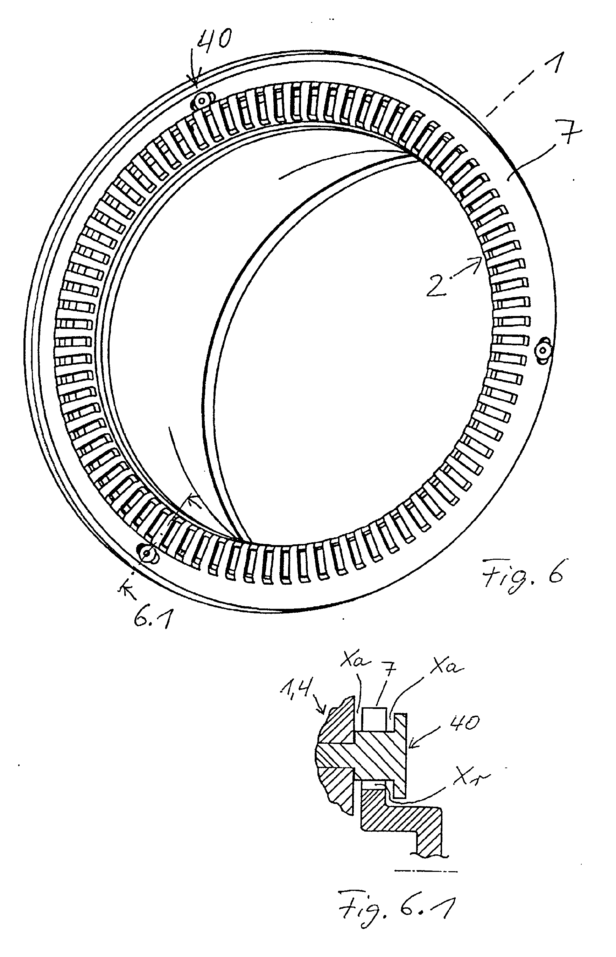

Bei der Ausgestaltung nach den Figuren 6 u. 6.1 ist das Polrad 2 mit der Bremsscheibe 1 über ein Befestigungsmittel 40 verbunden, wobei zwei Vorsprünge 8 entweder durch eine radiale Öffnung oder durch ein radiales Langloch innerhalb des Halteflansches 7 gebildet werden, vgl. Fig. 6.1. Das Befestigungsmittel 40 ist stufenförmig ausgebildet, um als Niet, Schraube oder Stift an der Bremsscheibe 1 befestigt zu werden und dem Polrad 2 axiale und gegebenenfalls radiale Ausgleichbewegungen durch entsprechendes Lagerspiel Xa, Xr zu ermöglichen.

Obwohl in den Figuren 1 bis 6.1 ein Polrad 2 mit einem Halteflansch 7 am radial äußeren Umfang und einer entsprechenden Lagerung an der Bremsscheibe 1 gezeigt ist, sei ausdrücklich darauf hingewiesen, dass der Halteflansch 7 inklusive der Lagerung an der Bremsscheibe 1 auch radial am Innenumfang entsprechend den Einbauverhältnissen - unter Beibehaltung aller Merkmale - angeordnet sein kann. Darüber hinaus schließt die Erfindung auch solche Ausgestaltungen ein, bei denen das Polrad nicht an einer Bremsscheibe, sondern beispielsweise an einer Bremstrommel, einer Radnabe oder an einem sonstigen Drehelement einer Bremse oder eines Rades gehalten sein kann.

Die in der obigen Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Bremse mit
einem Drehelement (1),
einem Polrad (2), das derart an dem Drehelement (1) gehalten ist, dass
- es mit dem Drehelement (1) um eine Drehachse dreht,
- eine erste quer zur Drehachse liegende Seite des Polrades (2) dem Drehelement (1) zugewandt ist und
- eine zweite quer zur Drehachse liegende Seite des Polrades (2) dem Drehelement (1) abgewandt ist, und
einem mit einem auf der ersten Seite des Polrades (2) angeordneten ersten Anschlagabschnitt zusammenwirkenden ersten Axialanschlag (5) und einem mit einem auf der zweiten Seite des Polrades (2) angeordneten zweiten Anschlagabschnitt zusammenwirkenden zweiten Axialanschlag zum Begrenzen einer Axialverschiebung des Polrades (2) bezüglich des Drehelementes (1) auf ein erstes vorbestimmtes Maß,
**dadurch gekennzeichnet, dass**
entlang jeder zur Drehachse parallelen Linie, die durch den ersten oder den zweiten Axialanschlag läuft, ein Abstand zwischen dem ersten Anschlagabschnitt und dem zweiten Anschlagabschnitt kleiner ist als ein Abstand zwischen dem ersten Axialanschlag und dem zweiten Axialanschlag.

2. Bremse nach Anspruch 1, **dadurch gekennzeichnet, dass** der zweite Axialanschlag an einer separaten Halteeinrichtung (3, 30, 40) ausgebildet ist.

3. Bremse nach Anspruch 1 oder 2, **dadurch gekennzeichnet, dass** der erste Axialanschlag an einer separaten Halteeinrichtung (30) ausgebildet ist.

4. Bremse nach Anspruch 2 oder 3, **dadurch gekennzeichnet, dass** das Drehelement (1) eine Ausnehmung (6) zum zumindest teilweisen Aufnehmen des Halteelements (3) aufweist.

5. Bremse nach einem der Ansprüche 2 bis 4, **dadurch gekennzeichnet, dass** die Halteeinrichtung einen Spreng- oder Wellring (3) aufweist.

6. Bremse nach einem der Ansprüche 2 bis 5, **dadurch gekennzeichnet, dass** die Halteeinrichtung (30, 40) eine parallel zur Drehachse liegende Verankerungseinrichtung aufweist.

7. Bremse nach Anspruch 6, **dadurch gekennzeichnet, dass** der zweite Axialanschlag an einem freien Ende der Verankerungseinrichtung liegt.

8. Bremse nach Anspruch 7, **dadurch gekennzeichnet, dass** der zweite Axialanschlag einstückig mit der Verankerungseinrichtung ausgebildet ist.

9. Bremse nach Anspruch 7, **dadurch gekennzeichnet, dass** der zweite Axialanschlag an einer von der Verankerungseinrichtung durchsetzten Scheibe ausgebildet ist.

10. Bremse nach einem der vorangehenden Ansprüche, **dadurch gekennzeichnet, dass** der erste Anschlagabschnitt (5) an einem Axialansatz an dem Drehelement (1) ausgebildet ist, der einen Winkelabschnitt um die Drehachse von weniger als 360° abdeckt.

11. Bremse nach einem der vorangehenden Ansprüche, **gekennzeichnet durch** einen mit einem dritten Anschlagabschnitt einer Umfangsfläche des Polrades (2) zusammenwirkenden Radialanschlag zum Begrenzen einer Verschiebung des Polrades (2) bezüglich des Drehelementes (1) in einer Richtung quer zur Drehachse auf ein zweites vorbestimmtes Maß (Xr), das größer als Null ist.

12. Bremse nach einem der vorangehenden Ansprüche, **gekennzeichnet durch** eine Zentriereinrichtung (4.1) zum Führen des Polrades (2) beim Anbringen an dem Drehelement (1).

13. Bremse nach einem der vorangehenden Ansprüche, **dadurch gekennzeichnet, dass** das Drehelement (1) eine Bremsscheibe ist.
